# FASCICULE DE BREVET EUROPEEN

(11) **EP 3 810 967 B1**
(45) Date de publication et mention de la délivrance du brevet: **01.03.2023**
(21) Numéro de dépôt: 19731745.6
(22) Date de dépôt: 20.06.2019
(51) Int. Cl.: F16L 11/08

(54) **CONDUITE FLEXIBLE DESTINÉE À ÊTRE IMMERGÉE DANS UNE ÉTENDUE D'EAU, PROCÉDÉ DE FABRICATION ET UTILISATION ASSOCIÉS**
FLEXIBLES ROHR ZUM EINTAUCHEN IN EIN GEWÄSSER, VERFAHREN ZU SEINER HERSTELLUNG UND SEINE VERWENDUNG
FLEXIBLE PIPE INTENDED TO BE IMMERSED INTO A BODY OF WATER, METHOD FOR THE MANUFACTURE AND USE THEREOF

(30) Priorité: 21.06.2018 FR 1855541
(43) Date de publication de la demande: 28.04.2021
(73) Titulaire: Technip France, 92400 Courbevoie (FR)
(72) Inventeur: DEMANZE, Frédéric, 76490 CAUDEBEC EN CAUX (FR)
(74) Mandataire: Lavoix
(86) Numéro de dépôt international: PCT/EP2019/066411
(87) Numéro de publication internationale: WO 2019/243548

(56) Documents cités:
- WO-A1-2008/113362
- WO-A1-2011/079845

## Description

La présente invention concerne une conduite flexible selon le préambule de la revendication 1.

La conduite flexible est notamment telle que décrite dans les documents normatifs publiés par l'American Petroleum Institute (API), API 17J « Spécification for Unbonded Flexible Pipe » 4ème Edition Mai 2014, et API RP 17B « Recommended Practice for Flexible Pipe » 5ème Edition Mai 2014. La conduite flexible est une conduite montante (ou «riser» en anglais) et/ou une conduite posée sur le fond marin (ou « flowline » en anglais).

La conduite est par exemple destinée au transport des hydrocarbures en eau profonde et est donc susceptible d'être utilisée sous fortes pressions, supérieures à 100 bars, voire jusqu'à 1000 bars, et à des températures élevées, supérieures à 130°C, voire 170°C, pendant de longues périodes de temps, c'est-à-dire plusieurs années, typiquement 30 ans.

Les conduites flexibles comprennent un assemblage de tronçons flexibles ou un seul tronçon flexible. Elles comportent généralement une gaine externe de protection définissant un volume intérieur et au moins une gaine interne imperméable disposée à l'intérieur du volume intérieur.

Cette gaine interne est typiquement une gaine de pression délimitant un passage de circulation d'un fluide mais elle peut aussi être, par exemple, une gaine intermédiaire disposée entre la gaine de pression et la gaine externe.

Le fluide est, en particulier, un hydrocarbure comportant une forte teneur en gaz corrosifs comme du dioxyde de carbone et du sulfure d'hydrogène.

Des couches d'amures de traction formées par des nappes de fils généralement métalliques sont disposées dans l'espace annulaire, qui est le volume entre la gaine interne et la gaine externe, pour assurer une bonne résistance à la traction de la conduite flexible.

Avantageusement, la longueur de la conduite est très grande, notamment pour les lignes adaptées pour les grandes profondeurs, ce qui engendre une grande tension sur les armures de traction. Cette grande tension s'exerce sur les armures de traction, essentiellement durant les phases d'installation et de fonctionnement pour les conduites montantes et essentiellement durant la phase d'installation pour les conduites reposant sur le fond marin.

Dans certains cas, l'espace annulaire contenant les couches d'armures de traction est soumis à des gaz acides tels que par exemple du sulfure d'hydrogène (H₂S) et du dioxyde de carbone (CO₂) issus des fluides transportés, et dont la pression partielle est relativement élevée.

En présence d'eau, pouvant provenir de l'eau contenue dans l'hydrocarbure transporté ayant migré et condensé à travers la gaine interne vers l'espace annulaire, ou de l'étendue d'eau en cas d'une déchirure de la gaine externe, les couches d'armure de traction subissent de la corrosion pouvant conduire, suivant la sévérité du milieu régnant dans l'espace annulaire, à une perte d'intégrité des propriétés mécaniques de la conduite flexible et à terme à sa ruine.

Par ailleurs, la combinaison du milieu corrosif associé à des chargements mécaniques peut conduire à la formation de corrosion sous contrainte (ou SCC de l'anglais « Stress Corrosion Cracking »).

Pour pallier ce problème, il est connu d'utiliser des gaines présentant un coefficient de perméation élevé, afin de faciliter l'évacuation des gaz présents dans l'annulaire vers l'extérieur de la conduite.

Par exemple, le document WO 2012/006998 A1 décrit une conduite flexible pour le transport d'hydrocarbures comportant une gaine intermédiaire disposée entre des couches d'armures. La gaine intermédiaire est poreuse, permettant l'évacuation des gaz emprisonnés entre la gaine interne et la gaine intermédiaire.

Une telle conduite flexible ne donne pas entière satisfaction. En effet, la tenue mécanique de la conduite et la résistance au phénomène de corrosion des couches d'armures peuvent encore être améliorées pour permettre l'utilisation de la conduite dans un milieu plus agressif.

Le document WO 2008/113362 A1 décrit une conduite flexible selon le préambule de la revendication 1.

Un but de l'invention est donc de fournir une conduite qui assure une durée de service de la conduite améliorée, en particulier une tenue mécanique et une résistance à la corrosion améliorées.

A cet effet, l'invention a pour but une conduite selon la revendication 1.

La conduite selon l'invention peut comprendre l'une ou plusieurs des caractéristiques des revendications 2 à 10 ou des caractéristiques suivantes, prise(s) isolément ou suivant toute combinaison techniquement possible : - la gaine polymérique comportant un mélange polymérique comprenant un polymère thermoplastique formant une matrice et au moins une composition de silicone incorporée dans ladite matrice est une gaine externe délimitant une surface externe de la conduite et/ou est une gaine intermédiaire entre la gaine interne et la gaine externe, notamment une gaine intermédiaire disposée à l'extérieur de chaque couche d'armures de traction, une gaine intermédiaire disposée entre une voûte de pression et une couche d'armures de traction, et/ou une gaine intermédiaire disposée entre deux couches d'armures de traction ;
- la poudre est de forme sensiblement sphérique.

L'invention a également pour objet un procédé de fabrication d'une conduite flexible selon la revendication 11.

Le procédé selon l'invention peut comprendre l'une ou plusieurs des caractéristiques des revendications 12 et 13, prise(s) isolément ou suivant toute combinaison techniquement possible.

L'invention a également pour objet l'utilisation d'une conduite du type précité pour le transport d'hydrocarbures.

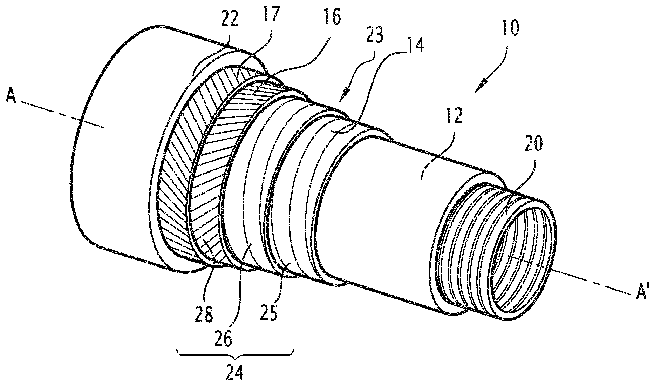

L'invention sera mieux comprise à la lecture de la description qui va suivre, donnée uniquement à titre d'exemple, et faite en se référant au dessin annexé, sur lequel :
- l'unique figure est une vue en perspective éclatée du tronçon central d'une conduite selon l'invention comprenant une gaine polymérique selon l'invention, la gaine polymérique selon l'invention étant ici la gaine externe.

Une conduite flexible 10 selon l'invention est illustrée partiellement sur l'unique figure.

La conduite flexible 10 est destinée à être disposée à travers une étendue d'eau (non représentée) dans une installation d'exploitation de fluide, notamment d'hydrocarbures.

L'étendue d'eau est par exemple une mer, un lac ou un océan. La profondeur de l'étendue d'eau est par exemple comprise entre 50 m et 4000 m.

L'installation d'exploitation de fluide comporte un ensemble de surface, généralement flottant, et un ensemble de fond qui sont généralement raccordés par la conduite flexible 10. La conduite flexible 10 permet aussi de relier des ensembles de fond entre eux, ou des ensembles de surfaces entre eux.

La conduite flexible 10 comporte un tronçon central, illustré en partie sur la figure, et à chacune des extrémités axiales du tronçon central, un embout d'extrémité non représenté.

La conduite flexible 10 est, dans cet exemple, une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite 10.

Avantageusement, toutes les couches adjacentes de la conduite flexible 10 sont libres de se déplacer l'une par rapport à l'autre. Une telle conduite est par exemple décrite dans les documents normatifs publiés par l'American Petroleum Institute (API), APl 17J (Mai 2014, 4^{ème} édition) et API RP17B (Mai 2014, 5^{ème} édition).

La conduite flexible 10 s'étend suivant un axe A-A'.

Dans tout ce qui suit, les termes « extérieur » et « intérieur » s'entendent généralement de manière radiale par rapport à l'axe A-A' de la conduite flexible 10, le terme « extérieur » s'entendant comme relativement plus éloigné radialement de l'axe A-A' et le terme « intérieur » s'entendant comme relativement plus proche radialement de l'axe A-A' de la conduite flexible 10.

Comme illustré sur la figure, la conduite flexible 10 délimite une pluralité de couches concentriques autour de l'axe A-A', qui s'étendent continûment le long de la conduite flexible 10 jusqu'aux extrémités de la conduite flexible 10.

En particulier, la conduite flexible 10 comprend une gaine interne 12 tubulaire, une voûte de pression 14, au moins une couche d'armures de traction 16, 17, une carcasse interne 20 et une gaine externe 22.

De manière connue, la gaine interne 12 est destinée à confiner de manière étanche le fluide transporté dans la conduite flexible 10. La gaine interne 12 est, avantageusement, formée en matériau polymère, par exemple à base d'une polyoléfine telle que du polyéthylène ou du polypropylène, à base d'un polyamide tel que du PA11 ou du PA12, ou à base d'un polymère fluoré tel que du polyfluorure de vinylidène (PVDF).

En variante, la gaine interne 12 est formée à base d'un polymère haute performance tel qu'un polyaryléthercétone (PAEK) tel que le polyéthercétone (PEK), le polyétheréthercétone (PEEK), le polyétheréthercétonecétone (PEEKK), le polyéthercétonecétone (PEKK) ou le polyéthercétoneéthercétonecétone (PEKEKK), le polyamide-imide (PAl), le polyéther-imide (PEI), le polysulfone (PSU), le polyphénylsulfone (PPSU), le polyéthersulfone (PES) , le polyarylsulfone (PAS), le polyphénylèneéther (PPE), le polysulfure de phénylène (PPS) les polymères à cristaux liquides (LCP), le polyphtalamide (PPA), les dérivés fluorés tels que le polytétrafluoroéthylène (PTFE), le perfluoropolyéther (PFPE), le perfluoroalkoxy (PFA) ou l'éthylène chlorotrifloroethylène (ECTFE) et/ou leurs mélanges.

L'épaisseur de la gaine interne 12 est, par exemple, comprise entre 5 mm et 20 mm.

La carcasse 20 est formée d'un feuillard métallique profilé, enroulé en spirale. Les spires du feuillard sont avantageusement agrafées les unes aux autres, ce qui permet de reprendre les efforts radiaux d'écrasement. Dans cet exemple, la carcasse 20 est disposée à l'intérieur de la gaine interne 12. La conduite flexible 10 est alors désignée par le terme anglais « rough bore » en raison de la géométrie de la carcasse 20.

En variante (non représentée), la conduite est dépourvue de carcasse interne, elle est alors désignée par le terme anglais « smooth bore ».

La gaine externe 22 est située à l'extérieur de la gaine interne 12. La gaine externe 22 définit un volume intérieur 23 dans lequel sont situées la carcasse 20, la gaine interne 12, la voûte de pression 14 et l'au moins une couche d'armures de traction 16, 17.

La gaine externe 22 définit avec la gaine interne 12 un espace annulaire 24.

L'espace annulaire 24 est défini dans le volume intérieur 23. L'espace annulaire 24 est propre à être inondé par un liquide, notamment par de l'eau provenant de l'étendue d'eau ou encore de l'eau contenue dans le fluide transporté qui aurait diffusé puis condensé au travers de la gaine interne 12, vers le volume intérieur 23.

La gaine externe 22 présente typiquement une forme d'un cylindre de révolution d'axe A-A'. La gaine externe 22 présente généralement un diamètre externe compris entre 50 mm (soit 2 pouces) et 500 mm (soit 20 pouces), de préférence entre 120 mm (soit 5 pouces) et 460 mm (soit 18 pouces), et une épaisseur comprise entre 0,5 mm et 20 mm, de préférence entre 4 mm et 15 mm.

La voûte de pression 14 est située dans l'espace annulaire 24, à l'extérieur de la gaine interne 12. La voûte de pression 14 est configurée pour reprendre les efforts radiaux liés à la pression régnant à l'intérieur de la gaine interne 12.

La voûte de pression 14 est, avantageusement, formée d'un fil profilé 25 métallique enroulé en hélice autour de la gaine interne 12. Le fil profilé 25 présente de préférence une géométrie en forme de Z. La géométrie en Z permet d'améliorer la résistance mécanique générale et de réduire la masse de la conduite flexible 10.

En variante, le fil profilé 25 présente une géométrie en forme de T, de U, de K, de X ou de I.

Le matériau métallique formant le fil profilé 25 est choisi parmi un acier au carbone, par exemple parmi les grades d'acier au carbone comprenant entre 0.1% et 0.8% de carbone. Lors des applications en milieu particulièrement corrosif, le matériau métallique est choisi parmi les aciers inoxydables tels que les aciers duplex.

La voûte de pression 14 est enroulée en hélice à pas court autour de la gaine interne 12. L'angle d'hélice est de valeur absolue proche de 90° par rapport à l'axe A-A' de la conduite flexible 10, typiquement compris entre 75° et 90°.

La conduite flexible 10 comprend optionnellement une frette 26.

La frette 26, lorsqu'elle est présente, est constituée par un enroulement en spirale d'au moins un fil avantageusement de section transversale rectangulaire autour de la voûte de pression 14. La superposition de plusieurs fils enroulés autour de la voûte de pression 14 peut avantageusement remplacer une épaisseur totale de frette 26 donnée. Ceci augmente la résistance à l'éclatement de la conduite flexible 10. L'enroulement du au moins un fil est à pas court autour de l'axe A-A' de la conduite flexible 10, c'est-à-dire avec un angle d'hélice de valeur absolue proche de 90°, typiquement compris entre 75° et 90°.

Dans une variante de réalisation de l'invention, la voûte de pression 14 et la frette 26 sont remplacées par une voûte de pression 14 d'épaisseur plus importante formée à partir d'un fil profilé 25 en métal présentant une géométrie en forme de T, de U, de K, de X ou de I, et/ou à partir d'au moins une bande en aramide à résistance mécanique élevée (Technora^{®} ou Kevlar^{®}), et/ou à partir d'au moins une bande composite comprenant une matrice thermoplastique dans laquelle sont noyées des fibres de carbone ou des fibres de verre.

Chaque couche d'armures de traction 16, 17 est située dans l'espace annulaire 24, à l'extérieur de la voûte de pression 14.

Dans l'exemple représenté sur la figure, la conduite flexible 10 comporte au moins une paire de couches d'armures de traction 16, 17.

Chaque paire comporte une première couche d'armures de traction 16 appliquée sur la voûte de pression 14, sur la gaine interne 12 ou sur une autre paire de couches d'armures de traction 16, 17, et une deuxième couche d'armures de traction 17, disposée autour de la première couche d'armures de traction 16.

Chaque couche d'armures de traction 16, 17 comporte au moins un élément d'armure 28 longitudinal enroulé à pas long autour de l'axe A-A' de la conduite flexible 10. La valeur d'hélice est inférieure ou égale à 60°, et est typiquement comprise entre 10° et 60°.

Les éléments d'armure 28 d'une première couche d'armures de traction 16 sont enroulés généralement suivant un angle opposé par rapport aux éléments d'armure 28 d'une deuxième couche d'armures de traction 17. Ainsi, si l'angle d'enroulement des éléments d'armure 28 de la première couche d'armures de traction 16 est égal à + α, α étant compris entre 10° et 60°, l'angle d'enroulement des éléments d'armure 28 de la deuxième couche d'armures de traction 17 disposée au contact de la première couche d'armures de traction 16 est par exemple de - α, avec α compris entre 10° et 60°.

Les éléments d'armure 28 sont par exemple formés par des fils métalliques ou en matériau composite, ou par des rubans à résistance mécanique élevée.

Le matériau métallique formant les éléments d'armure 28 est choisi parmi un acier au carbone, par exemple parmi les grades d'acier au carbone comprenant entre 0.1% et 0.8% de carbone. Lors des applications en milieu particulièrement corrosif, le matériau métallique est choisi parmi les aciers inoxydables tels que les aciers duplex.

Dans cet exemple, chaque couche d'armures de traction 16, 17 repose sur au moins une bande anti-usure (non représentée). La bande anti-usure est par exemple réalisée en plastique, notamment à base d'un polyamide ou d'un polyfluorure de vinylidène (PVDF). Elle présente une épaisseur inférieure à l'épaisseur de chaque gaine.

Avantageusement, un ruban de maintien tel qu'une bande en aramide à résistance mécanique élevée (Technora^{®} ou Kevlar^{®}) est enroulé autour de la deuxième couche d'armures de traction 17 la plus à l'extérieur par rapport à l'axe A-A', pour assurer un maintien mécanique des couches d'armures de traction 16, 17. Alternativement, les fibres d'aramide sont remplacées par des fibres de verre ou des fibres de carbone.

La conduite flexible 10 comprend au moins une gaine polymérique comportant un mélange polymérique comprenant un polymère thermoplastique formant une matrice et au moins une composition de silicone incorporée dans ladite matrice.

Dans l'exemple représenté sur la figure, la gaine polymérique est la gaine externe 22.

Dans cet exemple, la gaine externe 22 polymérique comporte un mélange polymérique comprenant un polymère thermoplastique formant une matrice et au moins une composition de silicone incorporée dans ladite matrice. La gaine externe 22 est configurée pour permettre l'évacuation des gaz présents dans l'espace annulaire 24 vers l'extérieur de la conduite. Avantageusement, la vitesse d'évacuation des gaz à travers la gaine externe 22 est plus élevée que la vitesse d'arrivée de ces gaz dans l'espace annulaire 24.

La gaine externe 22 est également configurée pour empêcher la pénétration de l'eau de l'extérieur de la conduite flexible 10 vers l'intérieur de la conduite flexible 10.

Le mélange polymérique comprend avantageusement de 10% à 90% en volume de polymère thermoplastique. De préférence, le mélange polymérique comprend moins de 70% en volume de polymère thermoplastique, typiquement moins de 50% en volume de polymère thermoplastique.

Le polymère thermoplastique est de préférence choisi parmi :
- les polyoléfines fonctionnalisées ou non fonctionnalisées,
- les polyamides,
- les polymères styréniques,
- les élastomères thermoplastiques (aussi notés TPE),
et un mélange de ceux-ci.

Lorsque le polymère thermoplastique est choisi parmi les polyoléfines, le polymère thermoplastique est par exemple un polyéthylène homopolymère, un polypropylène homopolymère, un polybutène, un copolymère de polyéthylène et de polypropylène ou un mélange de ceux-ci. Les copolymères sont par exemple à blocs ou statistiques.

La structure des TPE comporte deux phases non compatibles, l'une d'entre elles rassemblant les séquences thermoplastiques dispersées dans la phase élastomère. Lorsque le polymère thermoplastique est choisi parmi les élastomères thermoplastiques, le polymère thermoplastique est par exemple choisi parmi :
- les élastomères thermoplastiques oléfiniques (TPO), qui sont des mélanges physiques réalisés à partir de polyoléfines. On distingue ceux qui contiennent plus de 60% d'oléfine et ceux dont la phase élastomère est prépondérante (plus de 70 %), celle-ci pouvant être réticulée ou non ;
- les copolymères blocs à base de polystyrène dont la phase rigide est constituée de séquences polystyrène, la phase souple pouvant être par exemple formée de séquences polybutadiène (SBS), polyisoprène (SIS), ou poly (éthylène butylène) (SEBS) ;
- les copolymères blocs à base de polyuréthane (TPU) qui peuvent être obtenus par réaction conjointe d'un diol de haute masse moléculaire qui constitue la séquence élastomère cristallisable du TPE, sur un diisocyanate et un diol de basse masse moléculaire qui engendrent la séquence rigide ;
- les copolymères blocs à base de polyester tels que ceux obtenus par copolymérisation d'un polybutylène (PBT) ou d'un polyéthylène téréphtalate (PET) qui constitue les séquences rigides et cristallines et d'un glycol de bas poids moléculaire (butane diol, diéthylène glycol) qui, associé à un polyalkylene ether glycol forme la séquence souple cristallisable ;
- les copolymères blocs à base de polyamide dont les séquences rigides sont constituées de polyamide (PA) et les séquences souples cristallisables de polyéther, appelés aussi polyétheramides ; et
un mélange de ceux-ci.

Par exemple, le polymère thermoplastique est choisi parmi les polyoléfines, de préférence parmi les polyéthylènes et les polypropylènes.

Le polymère thermoplastique forme une matrice continue. Par «matrice continue», on entend une phase continue polymérique. La gaine externe 22 comprend des composants dispersés de façon discontinue dans la matrice polymérique, mais qui ne font pas partie de la matrice polymérique.

La matrice thermoplastique assure la rigidité et la résistance aux efforts circonférentiels (« hoop stress » en anglais) et au fluage de la gaine externe 22.

Le mélange polymérique présente un indice de fluidité à chaud (« Melt Flow Index » en anglais, ou MFI), inférieur à 20 g/10 min. L'indice de fluidité à chaud est mesuré selon la norme ASTM D1238, procédure A, typiquement à 190°C au moyen d'un piston de 5 kg. Ceci permet de réaliser la gaine externe 22 par extrusion selon des diamètres compris entre 50 mm (soit 2 pouces) et 500 mm (soit 20 pouces).

Le mélange polymérique présente une dureté shore D supérieure à 20, préférentiellement supérieure à 30, très préférentiellement supérieure à 40. La dureté shore D est mesurée selon la norme ASTM D 2240.

La composition de silicone est incorporée dans la matrice thermoplastique.

Le mélange polymérique comprend de 10% à 90% en volume de composition de silicone. De préférence, le mélange polymérique comprend plus de 30% en volume de composition de silicone, typiquement plus de 50% en volume de composition de silicone.

De façon connue, le silicone est un polymère, aussi désigné sous le nom « polysiloxane ».

La composition de silicone comprend et/ou est avantageusement constituée d'une poudre de silicone, ladite poudre étant dispersée dans la matrice thermoplastique, de préférence de manière homogène.

La poudre de silicone est de préférence de forme sensiblement sphérique, telle qu'observée par exemple par microscopie à balayage électronique, et de diamètre moyen en nombre, tel que mesuré par granulométrie par voie sèche via un appareil de mesure à diffraction laser suivant la Norme ISO 13320 :2009, inférieur à 100 µm, typiquement compris entre 5 µm et 30 µm.

La poudre de silicone est par exemple obtenue à partir de caoutchouc de silicone linéaire à haut poids moléculaire obtenu par exemple par réticulation de polydiméthylsiloxane (PDMS).

Selon un autre exemple, la poudre de silicone est obtenue par réticulation de polymethylsilsesquioxane possédant une structure de réseau tridimensionnel réticulée dans laquelle la liaison siloxane est exprimée par la formule brute (CH₃SiO_{3/2})n. La poudre de résine de silicone a l'avantage de présenter une dureté supérieure à la dureté de la poudre de caoutchouc de silicone. Un grade avantageux de poudre de silicone selon cet exemple de réalisation est le grade commerciale KMP-701 de Shin-Etsu Chemical Co., Ltd.

En variante, la poudre de silicone est obtenue à partir de sphères de caoutchouc silicone comportant un revêtement, aussi appelé « coating », en résine silicone. Cette variante de poudre minimise le risque de formation d'agglomérats de particules et permet une meilleure dispersion de la poudre dans la matrice thermoplastique.

Selon un mode de réalisation particulier, la poudre de silicone est fonctionnalisée et comporte des groupements compatibles avec la matrice thermoplastique. Par exemple, la poudre de silicone comporte au moins un groupement choisi parmi les groupements acrylates, notamment méthacrylates, et les groupements époxy. Ce mode de réalisation permet d'augmenter la force de liaison entre la composition de silicone et la matrice thermoplastique.

La composition de silicone augmente la perméabilité globale du mélange polymérique. La perméabilité aux gaz tels que le dioxyde de carbone et/ou le sulfure d'hydrogène de la gaine externe 22 selon l'invention est au moins deux fois supérieure, typiquement au moins cinq fois supérieure, à la perméabilité aux gaz tels que le dioxyde de carbone et/ou le sulfure d'hydrogène d'une gaine comprenant exclusivement la matrice thermoplastique. La perméabilité est mesurée selon la norme ISO 2556.

La composition de silicone améliore en outre la résistance au choc et à la déformation à la rupture de la matrice thermoplastique.

Le mélange polymérique présente un allongement à la rupture supérieur à 80%, l'allongement à la rupture étant mesuré à 20°C. L'allongement à la rupture est mesuré selon la norme ASTM D638, typiquement à 20 °C et à une vitesse de 50 mm/min.

De préférence, le mélange polymérique comprend en outre au moins un additif choisi parmi les composés anti-UV, les antioxydants, les charges de renfort organiques ou minérales, les plastifiants et un mélange de ceux-ci. Selon un mode de réalisation avantageux, le mélange polymérique comprend une concentration en plastifiant supérieure ou égale à 10% en volume, par exemple comprise entre 10% et 20% en volume.

Un procédé de fabrication de la conduite flexible 10 comportant une gaine externe 22 selon le premier mode de réalisation va maintenant être décrit.

Initialement, la gaine interne 12 est fournie. Selon un mode de réalisation particulier, une carcasse 20 est préalablement fournie et la gaine interne 12 est ensuite formée autour de la carcasse 20, par exemple par extrusion.

Généralement, un fil profilé 25 métallique est enroulé autour de la gaine interne 12 afin de former la voûte de pression 14 et les éléments d'armures 28 sont enroulés autour de la voûte de pression 14.

Au moins un élément d'armure 28 est également fourni.

Les éléments d'armures 28 sont enroulés autour de la gaine interne 12 afin de former les couches d'armures de traction 16, 17.

Puis, la gaine polymérique, qui est dans cet exemple la gaine externe 22, est formée par extrusion d'un pré-mélange polymérique comportant un polymère thermoplastique formant une matrice et au moins une composition de silicone incorporée dans ladite matrice.

La poudre de silicone est par exemple obtenue à partir de caoutchouc de silicone linéaire à haut poids moléculaire obtenue par exemple par réticulation de polydiméthylsiloxane (PDMS).

Selon un autre exemple, la poudre de silicone est obtenue par réticulation de polymethylsilsesquioxane possédant une structure de réseau tridimensionnel réticulée dans laquelle la liaison siloxane est exprimée par la formule brute (CH₃SiO_{3/2})n. La poudre de résine de silicone a l'avantage de présenter une dureté supérieure à la dureté de la poudre de caoutchouc de silicone. Un grade avantageux de poudre de silicone selon cet exemple de réalisation est le grade commerciale KMP-701 de Shin-Etsu Chemical Co., Ltd.

En variante, la poudre de silicone est obtenue à partir de sphères de caoutchouc silicone comportant un revêtement, aussi appelé « coating », en résine silicone.

Préalablement à la formation de la gaine externe 22, la poudre de silicone est dispersée dans le polymère thermoplastique, par exemple par extrusion bis vis (aussi appelée extrusion bivis) ou par un comalaxeur de type BUSS.

Selon un mode de réalisation particulier, au moins un additif est ajouté au polymère thermoplastique et à la composition de silicone avant l'étape d'extrusion de la gaine externe 22. L'additif est choisi parmi les composés anti-UV, les antioxydants, les charges de renfort organiques ou minérales, les plastifiants et un mélange de ceux-ci.

La gaine externe 22 est ensuite assemblée autour d'au moins une couche d'armures de traction 16, 17, typiquement par extrusion du pré-mélange autour de ladite couche d'armure 16, 17.

En variante, le mélange polymérique est extrudé sous forme de bandes, les bandes étant ensuite enroulées autour des couches d'armures de traction 16, 17 pour former la gaine externe 22.

L'installation de la conduite 10 va être brièvement décrite.

La conduite flexible 10 est immergée dans l'étendue d'eau et raccordée à un ensemble de surface et à un ensemble de fond. Alternativement, la conduite flexible 10 raccorde un ensemble de fond à un autre ensemble de fond après immersion dans l'étendue d'eau ou encore un ensemble de surface à un autre ensemble de surface.

De l'eau, initialement contenue dans les hydrocarbures transportés, peut migrer à travers la gaine interne 12 vers l'espace annulaire 24 et se condenser dans ledit espace.

De plus, des gaz acides tels que par exemple du sulfure d'hydrogène (H₂S) et du dioxyde de carbone (CO₂) migrent aussi à travers la gaine interne 12 vers l'espace annulaire 24.

Ces gaz acides migrent ensuite à travers la gaine externe 22. La gaine externe 22 présentant une perméabilité à ces gaz plus importante que la gaine interne 12, les gaz acides ne s'accumulent pas dans l'espace annulaire 24.

Le phénomène de corrosion des couches d'armures de traction 16, 17 est donc très limité, du fait de l'évacuation rapide du sulfure d'hydrogène et du dioxyde de carbone à travers la gaine externe 22.

Par ailleurs, compte tenu des propriétés mécaniques de la gaine externe 22 telles que la dureté shore D décrite plus haute, la gaine externe 22 peut supporter la pression radiale exercée sur la conduite flexible 10 liée aux efforts de serrage pendant l'installation par exemple.

Selon un deuxième mode de réalisation, la composition de silicone est dispersée dans la matrice thermoplastique par vulcanisation. Par exemple, la composition de silicone est réticulée au sein de la matrice thermoplastique lors de la mise en oeuvre par extrusion de la gaine externe 22. Le mélange polymérique présente une morphologie de type « gouttelette stable » et est appelé thermoplastique vulcanisé (TPV) à base de silicone.

Dans cet exemple, la composition de silicone comprend, par exemple, une gomme de diorganopolysiloxane et un composé de silicone organohydride, aussi appelé composé d'organosilicone hydride.

La gomme de diorganopolysiloxane présente en moyenne au moins deux groupes alcényles par molécule.

Le composé de silicone organohydride présente en moyenne au moins deux groupes hydrogène liés au silicium par molécule.

De préférence, la composition de silicone comporte :
- de 10% à 90% en volume de gomme de diorganopolysiloxane ; et
- de 10% à 90% en volume de composé de silicone organohydride.

Le mélange polymérique est typiquement un mélange de polyuréthane thermoplastique et de silicone réticulé, commercialisé notamment sous le grade TPSiV^{™} 4000-80 par la société Dow Chemical.

La gaine externe 22 est obtenue par formation d'un pré-mélange comportant le polymère thermoplastique et la composition de silicone et extrusion dudit pré-mélange. En particulier, le pré-mélange est obtenu par extrusion de granulés comprenant la composition de silicone vulcanisée et dispersée dans la matrice thermoplastique par extrusion dynamique. En variante, la gaine externe 22 est obtenue par vulcanisation de la composition de silicone dans la matrice thermoplastique au cours de l'extrusion du mélange polymérique.

Dans le cas d'un thermoplastique vulcanisé, le mélange polymérique forme avantageusement un réseau polymère interpénétré ou un réseau polymère semi-interpénétré.

Un réseau polymère interpénétré, aussi connu sous l'acronyme anglais « IPN » pour « Interpenetrating Polymer Network ») comprend au moins deux réseaux polymères qui sont, à l'échelle moléculaire, au moins en partie entrelacés sans être liés entre eux par liaisons covalentes. Ces réseaux ne peuvent être séparés sans rupture de liaison chimique.

Un réseau polymère semi-interpénétré (aussi connu sous l'acronyme anglais « SIPN » pour « Semi-Interpenetrating Polymer Network ») comprend au moins un réseau polymère et au moins un polymère linéaire ou ramifié et est caractérisé par la pénétration à l'échelle moléculaire d'au moins un réseau par plusieurs macromolécules linéaires ou ramifiées. Un réseau polymère semi-interpénétré, qui est parfois appelé réseau polymère pseudo-interpénétré, se distingue d'un réseau polymère interpénétré par le fait que les polymères linéaires ou ramifiés peuvent, en principe, être séparés du réseau polymère sans rupture de liaison chimique.

Dans une variante, la conduite 10 comporte en outre une gaine intermédiaire (non représentée) disposée dans l'espace annulaire 24 entre la gaine interne 12 et la gaine externe 22 et assemblée autour d'une couche d'armures de renfort 16, 17. Dans cette variante, la gaine polymérique est la gaine intermédiaire. La gaine intermédiaire comporte ainsi un mélange polymérique comprenant un polymère thermoplastique formant une matrice et au moins une composition de silicone incorporée dans ladite matrice.

Selon un mode de réalisation, la gaine intermédiaire comprend le mélange polymérique selon l'invention et la gaine externe 22 comprend un polymère tel qu'une polyoléfine.

Selon un autre mode de réalisation, la gaine externe 22 et la gaine intermédiaire comprennent chacune le mélange polymérique selon l'invention. Cela limite l'accumulation de gaz entre la gaine externe 22 et la gaine intermédiaire pouvant endommager la conduite flexible.

Selon un autre mode de réalisation, la gaine selon l'invention est agencée entre la voûte de pression 14 et la couche d'armure de traction interne 16.

Selon encore un autre mode de réalisation, la gaine selon l'invention est agencée entre les armures de traction 16,17.

En variante, une combinaison de ces modes est envisageable.

Selon un mode de réalisation particulier, chaque gaine polymérique de la conduite flexible 10 autre que la gaine interne 12 comporte un mélange polymérique comprenant un polymère thermoplastique formant une matrice et au moins une composition de silicone incorporée dans ladite matrice.

La présence de composition de silicone dans au moins une gaine polymérique augmente la perméabilité de cette gaine aux gaz issus des hydrocarbures et limite l'accumulation des gaz acides dans l'espace annulaire 24.

Le phénomène de corrosion des éléments métalliques, tels que les couches d'armures de traction 16, 17, est donc réduit. La durée de service de la conduite est ainsi prolongée.

L'espace annulaire 24 de la conduite flexible 10 selon l'invention est désévérisé et davantage de grades d'acier peuvent donc être utilisés pour les éléments métalliques.

De plus, la gaine polymérique présente des propriétés mécaniques, comme une résistance aux efforts circonférentiels, une dureté ou un allongement à la rupture, compatibles avec l'utilisation pour des conduites flexibles sous-marines, tout en restant simple à fabriquer.

## Revendications

1. Conduite flexible (10) destinée à être immergée dans une étendue d'eau comprenant :
- une gaine interne (12) définissant un passage de transport d'un fluide, notamment d'hydrocarbures ; et
- au moins une couche d'armures de traction (16, 17) disposée autour de la gaine interne (12) ;
**caractérisée en ce que** la conduite flexible (10) comporte en outre au moins une gaine polymérique comportant un mélange polymérique comprenant un polymère thermoplastique formant une matrice et au moins une composition de silicone incorporée dans ladite matrice,
le mélange polymérique comprenant :
- de 1 0% à 90% en volume, préférentiellement moins de 70% en volume, très préférentiellement moins de 50% en volume, de polymère thermoplastique ; et
- de 90% à 10% en volume, préférentiellement plus de 30% en volume, très préférentiellement plus de 50% en volume, de composition de silicone.

2. Conduite (10) selon la revendication 1, dans laquelle le mélange polymérique comprend en outre au moins un additif choisi parmi les composés anti-rayonnement UV, les antioxydants, les charges organiques, les charges minérales, les plastifiants et un mélange de ceux-ci.

3. Conduite (10) selon l'une quelconque des revendications 1 à 2, dans laquelle le mélange polymérique présente un indice de fluidité à chaud inférieur à 20 g/10 min, l'indice de fluidité à chaud étant mesuré à 190°C au moyen d'un piston de 5 kg.

4. Conduite (10) selon l'une quelconque des revendications 1 à 3, dans laquelle le mélange polymérique présente une dureté shore D supérieure à 20, préférentiellement supérieure à 30, très préférentiellement supérieure à 40.

5. Conduite (10) selon l'une quelconque des revendications 1 à 4, dans laquelle le mélange polymérique présente un allongement à la rupture supérieur à 80%, l'allongement à rupture étant mesuré à 20°C.

6. Conduite (10) selon l'une quelconque des revendications 1 à 5, dans laquelle le polymère thermoplastique est choisi parmi les polyoléfines, les polyamides, les polymères styréniques, les élastomères thermoplastiques et un mélange de ceux-ci.

7. Conduite (10) selon l'une quelconque des revendications 1 à 6, dans laquelle la composition de silicone comprend et/ou est avantageusement constituée d'une poudre de silicone, la poudre étant de préférence de diamètre inférieur à 100 µm, préférentiellement compris entre 5 µm et 30 µm.

8. Conduite (10) selon l'une quelconque des revendications 1 à 6, dans laquelle le mélange polymérique est un thermoplastique vulcanisé obtenu par extrusion.

9. Conduite (10) selon la revendication 8, dans laquelle la composition de silicone comprend :
- une gomme de diorganopolysiloxane présentant en moyenne au moins deux groupes alcényles par molécule ; et
- un composé de silicone organohydride présentant en moyenne au moins deux groupes hydrogène liés au silicium par molécule.

10. Conduite (10) selon l'une quelconque des revendications 1 à 9, dans laquelle la gaine polymérique présente une épaisseur comprise entre 0,5 mm et 20 mm.

11. Procédé de fabrication d'une conduite flexible (10) destinée à être immergée dans une étendue d'eau, la conduite flexible (10) comprenant une pluralité de couches concentriques, le procédé comprenant les étapes suivantes :
a) fourniture d'une gaine interne (12), définissant un passage de transport d'un fluide, notamment d'hydrocarbures ;
b) assemblage de la gaine interne (12) avec au moins une couche d'armures de traction (16, 17), la couche d'armures de traction (16, 17) étant disposée autour de la gaine interne (12) ;
**caractérisé en ce que** le procédé comporte les étapes suivantes :
c) fourniture d'au moins une gaine polymérique comprenant un mélange polymérique comportant un polymère thermoplastique formant une matrice et au moins une composition de silicone incorporée dans ladite matrice, le mélange polymérique comprenant de 10% à 90% en volume, préférentiellement moins de 70% en volume, très préférentiellement moins de 50% en volume, de polymère thermoplastique ; et de 90% à 10% en volume, préférentiellement plus de 30% en volume, très préférentiellement plus de 50% en volume, de composition de silicone ; et
d) assemblage de la gaine polymérique autour d'au moins une couche concentrique de la conduite flexible (10), de préférence autour de la gaine interne (12), d'une voûte de pression (14) et/ou d'une couche d'armures de traction (16, 17).

12. Procédé selon la revendication 11, dans lequel la gaine polymérique est obtenue par formation d'un pré-mélange comportant le polymère thermoplastique et la composition de silicone et extrusion dudit pré-mélange.

13. Procédé selon la revendication 12, dans lequel le pré-mélange est obtenu par extrusion de granulés comprenant la composition de silicone vulcanisée et dispersée dans la matrice thermoplastique par extrusion dynamique.

14. Utilisation d'une conduite (10) selon l'une quelconque des revendications 1 à 10 pour le transport d'hydrocarbures.

## Patentansprüche

1. Flexible Leitung (10), die in ein Gewässer eingetaucht werden soll, umfassend:
- eine innere Hülle (12), die einen Durchgang für den Transport eines Fluids, insbesondere von Kohlenwasserstoffen, definiert; und
mindestens eine Schicht von Zugbewehrungen (16, 17), die um die innere Hülle (12) angeordnet ist;
**dadurch gekennzeichnet, dass** die flexible Leitung (10) ferner mindestens eine Polymerhülle aufweist, die eine Polymermischung umfasst, die ein thermoplastisches Polymer umfasst, das eine Matrix bildet, und mindestens eine Silikonzusammensetzung, die in der Matrix integriert ist,
die Polymermischung umfassend:
- von 10 bis 90 Volumenprozent, vorzugsweise weniger als 70 Volumenprozent, sehr bevorzugt weniger als 50 Volumenprozent, thermoplastisches Polymer; und
- von 90 bis 10 Volumenprozent, vorzugsweise mehr als 30 Volumenprozent, sehr bevorzugt mehr als 50 Volumenprozent, an Silikonzusammensetzung.

2. Leitung (10) nach Anspruch 1, wobei die Polymermischung ferner mindestens einen Zusatzstoff umfasst, der ausgewählt ist aus UV-Strahlungsschutzverbindungen, Antioxidantien, organischen Füllstoffen, mineralischen Füllstoffen, Weichmachern und einer Mischung davon.

3. Leitung (10) nach einem der Ansprüche 1 bis 2, wobei die Polymermischung einen Schmelzindex von weniger als 20 g/10 min aufweist, wobei der Schmelzindex bei 190 °C unter Verwendung eines 5 kg Kolbens gemessen wird.

4. Leitung (10) nach einem der Ansprüche 1 bis 3, wobei die Polymermischung eine Shore-Härte D von mehr als 20, bevorzugt mehr als 30, sehr bevorzugt mehr als 40, aufweist.

5. Leitung (10) nach einem der Ansprüche 1 bis 4, wobei die Polymermischung eine Bruchdehnung von mehr als 80 % aufweist, wobei die Bruchdehnung bei 20 °C gemessen wird.

6. Leitung (10) nach einem der Ansprüche 1 bis 5, wobei das thermoplastische Polymer ausgewählt ist aus Polyolefinen, Polyamiden, Styrolpolymeren, thermoplastischen Elastomeren und einer Mischung davon.

7. Leitung (10) nach einem der Ansprüche 1 bis 6, wobei die Silikonzusammensetzung vorteilhafterweise ein Silikonpulver umfasst und/oder daraus besteht, wobei das Pulver vorzugsweise einen Durchmesser von weniger als 100 µm, vorzugsweise zwischen 5 µm und 30 µm, aufweist.

8. Leitung (10) nach einem der Ansprüche 1 bis 6, wobei die Polymermischung ein vulkanisierter Thermoplast ist, der durch Extrusion erlangt wird.

9. Leitung (10) nach Anspruch 8, wobei die Siliconzusammensetzung Folgendes umfasst:
- ein Diorganopolysiloxangummi, das durchschnittlich mindestens zwei Alkenylgruppen pro Molekül aufweist; und
- eine Organohydrid-Silikonverbindung, die durchschnittlich mindestens zwei an Silizium gebundene Wasserstoffgruppen pro Molekül aufweist.

10. Leitung (10) nach einem der Ansprüche 1 bis 9, wobei die Polymerhülle eine Stärke zwischen 0,5 mm und 20 mm aufweist.

11. Verfahren zur Herstellung einer flexiblen Leitung (10) zum Eintauchen in ein Gewässer, die flexible Leitung (10) umfassend eine Vielzahl von konzentrischen Schichten, das Verfahren umfassend die folgenden Schritte:
a) Bereitstellen einer inneren Hülle (12), die einen Durchgang für den Transport eines Fluids, insbesondere von Kohlenwasserstoffen, definiert;
b) Zusammenfügen der inneren Hülle (12) mit mindestens einer Zugbewehrungsschicht (16, 17), wobei die Zugbewehrungsschicht (16, 17) um die innere Hülle (12) angeordnet ist;
**dadurch gekennzeichnet, dass** das Verfahren ferner die folgenden Schritte umfasst:
c) Bereitstellen mindestens einer Polymerhülle, umfassend eine Polymermischung, die ein thermoplastisches Polymer, das eine Matrix bildet, und mindestens eine Silikonzusammensetzung, die in die Matrix integriert ist, umfasst, die Polymermischung umfassend 10 bis 90 Volumenprozent, vorzugsweise weniger als 70 Volumenprozent, sehr bevorzugt weniger als 50 Volumenprozent, thermoplastisches Polymer; und von 90 % bis 10 Volumenprozent, vorzugsweise mehr als 30 Volumenprozent, sehr bevorzugt mehr als 50 Volumenprozent, an Silikonzusammensetzung
d) Zusammenfügen der Polymerhülle um mindestens eine konzentrische Schicht der flexiblen Leitung (10), vorzugsweise um die innere Hülle (12), ein Druckgewölbe (14) und/oder eine Schicht von Zugbewehrungen (16, 17).

12. Verfahren nach Anspruch 11, wobei die Polymerhülle durch Bilden einer Vormischung, die das thermoplastische Polymer und die Silikonzusammensetzung enthält, und Extrudieren der Vormischung erlangt wird.

13. Verfahren nach Anspruch 12, wobei die Vormischung durch Extrudieren von Granulat erlangt wird, das die vulkanisierte und in der thermoplastischen Matrix dispergierte Silikonzusammensetzung durch dynamische Extrusion umfasst.

14. Verwendung einer Leitung (10) nach einem der Ansprüche 1 bis 10 für den Transport von Kohlenwasserstoffen.

## Claims

1. A flexible pipe (10) intended to be immersed in a body of water, comprising:
- an inner sheath (12) defining a passage for transporting a fluid, particularly hydrocarbons; and
- at least one layer of tensile armour (16, 17) arranged around the inner sheath (12); **characterised in that** the flexible pipe (10) further comprises at least one polymeric sheath having a polymer blend comprising a thermoplastic polymer forming a matrix and at least one silicone composition incorporated into said matrix,
the polymer blend comprising:
- from 10% to 90% by volume, preferably less than 70% by volume, very preferably less than 50% by volume, of thermoplastic polymer; and
- from 90% to 10% by volume, preferably more than 30% by volume, very preferably more than 50% by volume, of silicone composition.

2. The pipe (10) according to claim 1, wherein the polymer blend further comprises at least one additive selected from UV anti-radiation compounds, antioxidants, organic fillers, inorganic fillers, plasticisers and a mixture thereof.

3. The pipe (10) according to any one of claims 1 to 2, wherein the polymer blend has a melt flow index of less than 20 g/10 min, the melt flow index being measured at 190 °C using a 5 kg piston.

4. The pipe (10) according to any one of claims 1 to 3, wherein the polymer blend has a shore hardness D greater than 20, preferably greater than 30, most preferably greater than 40.

5. The pipe (10) according to any one of claims 1 to 4, wherein the polymer blend has an elongation at break greater than 80%, the elongation at break being measured at 20 °C.

6. The pipe (10) according to any one of claims 1 to 5, wherein the thermoplastic polymer is selected from polyolefins, polyamides, styrenic polymers, thermoplastic elastomers, and a mixture thereof.

7. The pipe (10) according to any one of claims 1 to 6, wherein the silicone composition comprises and/or advantageously consists of a silicone powder, the powder preferably being of diameter less than 100 µm, preferably between 5 µm and 30 µm.

8. The pipe (10) according to any one of claims 1 to 6, wherein the polymer blend is a vulcanised thermoplastic obtained by extrusion.

9. The pipe (10) according to claim 8, wherein the silicone composition comprises:
- a diorganopolysiloxane gum having on average at least two alkenyl groups per molecule; and
- an organohydride silicone compound having on average at least two silicon-bonded hydrogen groups per molecule.

10. The pipe (10) according to any one of claims 1 to 9, wherein the polymeric sheath has a thickness substantially between 0.5 mm and 20 mm.

11. A method for manufacturing a flexible pipe (10) intended to be immersed in a body of water, the flexible pipe (10) comprising a plurality of concentric layers, the method comprising the following steps:
a) providing an inner sheath (12), defining a passage for transporting a fluid, particularly hydrocarbons;
b) assembling the inner sheath (12) with at least one layer of tensile armour (16, 17), the layer of tensile armour (16, 17) being arranged around the inner sheath (12);
**characterised in that** the method comprises the following steps:
c) providing at least one polymeric sheath comprising a polymer blend comprising a thermoplastic polymer forming a matrix and at least one silicone composition incorporated into said matrix, the polymer blend comprising from 10% to 90% by volume, preferably less than 70% by volume, very preferably less than 50% by volume, of thermoplastic polymer; and from 90% to 10% by volume, preferably more than 30% by volume, very preferably more than 50% by volume, of silicone composition; and
d) assembling the polymeric sheath around at least one concentric layer of the flexible pipe (10), preferably around the inner sheath (12), a pressure vault (14), and/or a layer of tensile armour (16, 17).

12. The method according to claim 11, wherein the polymeric sheath is obtained by forming a pre-blend comprising the thermoplastic polymer and the silicone composition and extruding said pre-blend.

13. The method according to claim 12, wherein the pre-blend is obtained by extruding pellets comprising the silicone composition vulcanised and dispersed in the thermoplastic matrix by dynamic extrusion.

14. Use of a pipe (10) according to any one of claims 1 to 10 for the transport of hydrocarbons.
